# EUROPÄISCHE PATENTSCHRIFT

(11) **EP 2 069 124 B1**
(45) Veröffentlichungstag und Bekanntmachung des Hinweises auf die Patenterteilung: **21.08.2013**
(21) Anmeldenummer: 07820459.1
(22) Anmeldetag: 21.09.2007
(51) Int. Cl.: B29C 45/20, B29C 45/63, B29C 45/27, B29C 45/34

(54) **ÜBERGABEELEMENT, INSBESONDERE FÜR EINE DEKOMPRESSIONS-ANGUSSBUCHSE ODER EINE DEKOMPRESSIONS-MASCHINENDÜSE**
TRANSFER ELEMENT, IN PARTICULAR FOR A DECOMPRESSION SPRUE BUSH AND DECOMPRESSION MACHINE NOZZLE
ÉLÉMENT DE REMISE, EN PARTICULIER POUR UNE BUSE D'ALIMENTATION DE DÉCOMPRESSION OU UNE BUSE DE MACHINE DE DÉCOMPRESSION

(30) Priorität: 29.09.2006 DE 102006046641
(43) Veröffentlichungstag der Anmeldung: 17.06.2009
(73) Patentinhaber: MHT Mold & Hotrunner Technology AG, 65239 Hochheim (DE)
(72) Erfinder: PÜST, Wolfgang, 65719 Hofheim-Wallau (DE); BRINZING, Matthias, 64295 Darmstadt (DE)
(74) Vertreter: WSL Patentanwälte Partnerschaftsgesellschaft
(86) Internationale Anmeldenummer: PCT/EP2007/060036
(87) Internationale Veröffentlichungsnummer: WO 2008/040647

(56) Entgegenhaltungen:
- DE-A1- 1 454 821
- JP-A- 11 170 320
- JP-A- 54 055 061
- JP-A- 63 056 421
- JP-A- 2004 050 459

## Beschreibung

Die vorliegende Erfindung betrifft ein Übergabeelement, insbesondere eine Angußbuchse bzw. eine Maschinendüse, für ein Spritzgießsystem mit einem Durchflußlumen für ein plastifiziertes Kunststoffmaterial.

Die Erfindung betrifft darüber hinaus ein Heißkanalsystem mit einer Angußbuchse und eine Spritzgießmaschine mit einer Maschinendüse.

Ein Angußsystem bzw. -kanal ist die Verbindung von der Maschinendüse einer Spritzgießmaschine bis zum sogenannten Anschnitt. Der Anschnitt bildet den Übergang vom Angußkanal in die Formteilkavität, das sogenannte Formnest. Aus dem Stand der Technik sind Heißkanalsysteme für Spritzgießmaschinen bekannt. Solche Heißkanalsysteme stellen die technologisch am weitesten entwickelten Angussysteme bzw. - kanäle für Spritzgießformen dar. Heißkanalsysteme dienen der Verteilung des in der Spritzgießmaschine aufbereiteten Kunststoffs im schmelzflüssigen Zustand von der Maschinendüse der Spritzgießmaschine hin zu den einzelnen Kavitäten eines Spritzgießwerkzeugs. Dabei ist das Heißkanalsystem so temperierbar, daß der Kunststoff während des gesamten Spritzgießzyklus im Heißkanalsystem im schmelzflüssigen Zustand gehalten wird. Daher werden Heißkanalsysteme häufig auch als eine Verlängerung der Maschinendüse betrachtet.

Während des Aufschmelzens und Plastifizierens von Kunststoffmaterialien, insbesondere von PET-Materialien, entsteht während des Verarbeitungsprozesses eine gewisse Menge an Gas. Vermutlich enthält das Gas überwiegend Substanzen, welche auf Additive zurückgehen, welche dem PET-Ausgangsmaterial zugesetzt werden, um dessen Eigenschaften gezielt zu verändern. Dabei entsteht das Gas insbesondere bei der Aggregatumwandlung der Schmelze während der Plastifizierung durch eine Maschinenschnecke aufgrund von Scherung, Wärme und Überhitzung, wobei das Gas kühleren Stellen des Spritzgießsystems als Staub kondensiert. Dieser Staub ist hochgradig aggressiv und schlägt sich insbesondere an kälteren Teilen des Heißkanalsystems nieder. Dabei führt der Niederschlag des Staubs vor allem in den Kolbengehäusen der Nadelventile, welche das Heißkanalsystem gegenüber dem Spritzgießwerkzeug abdichten, zu einem hohen Verschleiß der Kolbendichtungen. Daher sind in vielen Nadelventilsystemen für Heißkanalsysteme Entlüftungsöffnungen vorgesehen, über welche der Staub aus dem Heißkanalsystem entweichen kann, bevor er sich im Bereich sich bewegender Teile, z.B. an den Kolbengehäusen der Nadelventile, niederschlägt und dort für einen erhöhten Verschleiß sorgt.

Mit dem Materialdurchsatz durch das Spritzgießsystem, das heißt der plastifizierten Menge an Kunststoffmaterial pro Zeiteinheit, steigt die Menge an Staub in dem System an. Moderne Spritzgießsysteme werden für einen immer höheren Materialdurchsatz konstruiert, welcher insbesondere durch die Erhöhung der Anzahl der Formnester oder Kavitäten in den Spritzgießwerkzeugen und durch eine Verkürzung der Zykluszeiten erforderlich wird. Der Verschleiß insbesondere in den Kolbengehäusen der Ventile der Heißkanalplatte nimmt damit ebenfalls zu, da die erhöhte Menge an Staub nicht mehr in ausreichendem Maße durch die Entgasungsbohrungen in den Kolbengehäusen der Ventile aus dem System entweichen kann.

Das Dokument JP 540 55 061 A offenbart Kanäle zum Führen von Gießharz, wobei in den Kanälen erzeugtes Gas über feine Spalte, die mit einer mit Hilfe einer Vakuumpumpe evakuierten Entgasungskammer in Verbindung stehen, entfernt wird.

Es ist daher die Aufgabe der vorliegenden Erfindung gegenüber diesem Stand der Technik, ein Übergabeelement für ein Spritzgießsystem bereitzustellen, welches ermöglicht, den Materialdurchsatz des Spritzgießsystems weiter zu erhöhen, ohne einen erhöhten Verschleiß von Dichtungen und anderen Systemkomponenten in Kauf nehmen zu müssen.

Diese Aufgabe wird erfindungsgemäß dadurch gelöst, daß ein Übergabeelement für ein Spritzgießsystem bereitgestellt wird, mit einem Durchflußlumen für ein plastifiziertes Kunststoffmaterial, wobei es eine Einrichtung zur Entgasung des Durchflußlumens aufweist, und das einen im Wesentlichen hohlzylindrischen Grundkörper mit einer inneren und einer äußeren Mantelfläche aufweist, wobei die Einrichtung zur Entgasung mindestens einen gasdurchlässigen Kanal aufweist, welcher die innere und die äußere Mantelfläche verbindet, wobei der Grundkörper zumindest zweiteilig aufgebaut ist, mit einem Oberteil und einem Unterteil, die im Wesentlichen hohlzylindrisch sind und jeweils mindestens eine Grundfläche aufweisen, wobei das Oberteil und das Unterteil so angeordnet sind, dass ihre Grundflächen zumindest abschnittsweise aneinander stoßen, wobei die Grundfläche des Oberteils und/oder des Unterteils einen Freischliff aufweist, so daß mindestens ein Spalt zwischen den Grundflächen gebildet wird, welcher zumindest als Abschnitt eines gasdurchlässigen Kanals die innere und die äußere Mantelfläche des Grundkörpers verbindet.

Dabei kann das Übergabeelement die Angußbuchse eines Heißkanalsystems oder die Maschinendüse einer Spritzgießmaschine sein. Dabei können alternativ auch die Angußbuchse und die Maschinendüse des Systems erfindungsgemäß ausgestattet sein.

Die Angußbuchse bildet das heißkanalseitige Übergabeelement für die Einleitung des heißen plastifizierten Kunststoffmaterials von der Spritzgießmaschine in das Heißkanalsystem. Dabei ist die Angußbuchse dafür vorgesehen, daß sie mit der Maschinendüse der Spritzgießmaschine zusammenwirkt, wobei meist eine Dichtfläche der Angußbuchse mit einer Dichtfläche der Maschinendüse so in Eingriff tritt, daß beim Übertritt der plastifizierten Kunststoffmasse von der Maschinendüse in die Angußbuchse des Heißkanalsystems kein Kunststoffmaterial austritt.

Der volumenmäßig größte Anteil an staubhaltigem Gas wird bei der Plastifizierung in der Spritzgießmaschine selbst erzeugt, so daß es vorteilhaft ist, wenn dieses staubhaltige Gas aus dem Spritzgießsystem bereits vor dem Eintritt des Kunststoffmaterials in das Heißkanalsystem aus dem Durchflußlumen entweichen kann. Auf diese Weise wird der Gasdruck im Durchflußlumen des Heißkanalsystems gesenkt, d.h. dekomprimiert.

Über den gasdurchlässigen Kanal kann das Gas aus dem Übergabeelement entweichen, bevor es in das Heißkanalsystem übertritt, so daß sich im Heißkanalsystem im wesentlichen kein Staub niederschlagen kann.

Die Angußbuchse wird vorzugsweise an Ihrem heißkanalseitigen Ende mit dem Heißkanalsystem verschraubt, während das maschinenseitige Ende der Buchse von einem Zentrierring zentrisch in einer Ausnehmung der Platte gehalten wird. Dabei ist es insbesondere vorteilhaft, wenn der gasdurchlässige Kanal in einem Bereich der äußeren Mantelfläche mündet, welcher außerhalb des Zentrierrings der Angußbuchse, in Richtung auf die Spitzgießmaschine hin verschoben angeordnet ist. Auf diese Weise kann der Staub entweichen, ohne sich an Funktionselementen des Heißkanalsystems niederzuschlagen.

Eine solche Ausgestaltung des Grundkörpers der Angußbuchse ist vorteilhaft, da sie es ermöglicht, den Kanal in der Trennebene zwischen dem Ober- und Unterteil des Grundkörpers anzuordnen, so daß der Kanal oder Teile davon durch einen Freischliff in der Grundfläche des Ober- / oder Unterteils des Grundkörpers hergestellt werden kann.

In der Praxis werden die Durchmesser der Angußbuchsen der Heißkanäle typischerweise so gewählt, daß sie zu dem Durchmesser der Maschinendüse der Spritzgießmaschine passen, für welche das Heißkanalsystem angeschafft wird. Soll zu einem späteren Zeitpunkt ein anderes Heißkanalsystem an der gleichen Maschine verwendet werden, so muß bei den aus dem Stand der Technik bekannten Systemen die Maschinendüse oder die vollständige Angußbuchse des neu zu verwendenden Heißkanalsystems aufwendig getauscht werden, um die Funktion der Kombination von Spritzgießmaschine und Heißkanalsystem zu gewährleisten. Der erfindungsgemäße zweiteilige Aufbau des Grundkörpers weist demgegenüber den Vorteil auf, daß das Angußbuchsenoberteil schnell ausgetauscht werden kann und als Adapter dienen kann, um den Anschluß der Angußbuchse eines beliebig dimensionierten Heißkanals an eine vorgegebene Maschinendüse zu ermöglichen.

Dabei wird unter einem Freischliff ein aus der Grundfläche des Unter- oder Oberteils ausgenommener Bereich mit geringer Tiefe verstanden, wobei dieser beispielsweise durch Schleifen oder Fräsen hergestellt wird.

Entscheidend für die Funktionsweise der Entgasungseinrichtung ist, daß sie in radialer Richtung zumindest einen Abschnitt aufweist, welcher für das Gas durchlässig ist, während das plastifizierte Kunststoffmaterial nicht durch diesen Abschnitt austreten kann. Dazu muß das Lumen dieses Abschnitts, welcher in der vorliegenden Anmeldung als Freischliff bezeichnet ist, zumindest in einer Richtung eine sehr geringe Spaltbreite aufweisen. Ein solcher Spalt weist zumindest in einer Richtung parallel zur Achse des Übergabeelements, d.h. parallel zur Durchflußrichtung, eine geringe Abmessung oder in Umfangsrichtung eine geringe Abmessung auf. Dabei wird unter einer geringen Abmessung vorzugsweise eine Spaltbreite von weniger als 0,04 mm, besonders bevorzugt von 0,03 mm verstanden.

Ein solcher Freischliff läßt sich insbesondere mit sehr geringen Tiefen in axialer Richtung, fertigen. Der durch einen Freischliff mit geringer Tiefe gebildete Spalt ermöglicht das Entweichen von Gas, ohne daß Kunststoffmaterial durch einen solchen Spalt der Angußbuchse oder der Maschinendüse entweichen kann. Dabei hat sich eine Tiefe des Freischliffs von weniger als 0,04 mm und besonders bevorzugt mit einer Tiefe von etwa 0,03 mm als vorteilhaft herausgestellt. Eine derartige Ausgestaltung ermöglicht das Entweichen einer ausreichend großen Gasmenge, während trotzdem kein Kunststoffmaterial aus dem Übergabeelement austreten kann.

Dabei ist es ausreichend, wenn der Freischliff mit der bevorzugten geringen Tiefe den gasdurchlässigen Kanal lediglich in dem unmittelbar an die innere Mantelfläche des Grundkörpers anschließenden Bereich bildet, während das durch den Spalt hindurchgetretene Gas von einem Kanal mit größeren Querschnitt oder einer Nut weiter radial nach außen geführt wird, da die geringe Dimension des Entgasungskanals nur im Inneren des Grundkörpers benötigt wird, um zu verhindern, daß das plastifizierte Kunststoffmaterial ebenfalls aus dem Übergabelement austritt.

Bevorzugt ist eine Länge des Freischliffs in radialer Richtung von 2 bis 3 mm, besonders bevorzugt von 1,5 mm.

In einer besonders bevorzugten Ausführungsform ist der Freischliff in der Grundfläche des Ober-/ oder des Unterteils derart angeordnet, daß über den Umfang verteilt mehrere gasdurchlässige Kanäle gebildet werden, welche die innere und die äußere Mantelfläche des Grundkörpers verbinden. Dabei ist es besonders vorteilhaft, wenn die einzelnen Kanäle, die zumindest teilweise von dem Freischliff gebildet werden, sternförmig in Umfangsrichtung des Übergabe-elements verteilt sind, so daß ein Gasaustritt in allen Richtungen möglich ist.

In einer besonders bevorzugten Ausführungsform weist der Freischliff einen an die innere Mantelfläche angrenzenden, in Umfangsrichtung zusammenhängenden, im wesentlichen kreisförmigen Bereich auf. In einem solchen kreisförmigen Spalt kann in allen radialen Richtungen Gas aus der Kunststoffmasse austreten und aus dem Übergabeelement abgeführt werden.

Dabei kann in einer Ausführungsform die Verbindung zwischen dem durch den Freischliff gebildeten Spalt und der äußeren Mantelfläche des Grundkörpers durch einen oder mehrere Bereiche mit Freischliff erfolgen.

Alternativ oder zusätzlich können Bohrungen oder Nuten vorgesehen sein, die in radialer Richtung verlaufen und den kreisförmigen Freischliff nach Außen entlüften. Die Nuten oder Bohrungen weisen einen Durchmesser auf, der größer ist als die Tiefe des Freischliffs. Auf diese Weise kann durch Bohrungen oder Nuten mit geringerem Flächenverbrauch in Umfangsrichtung eine gleiche oder größere Menge an Gas abgeführt werden als durch vergleichbare Freischliffe in radialer Richtung. Daher wird auf diese Weise eine größere Auflagefläche zwischen dem Ober- (4a') und dem Unterteil der Angußbuchse bereitgestellt.

In einer weiteren Ausführungsform ist der umlaufende Freischliff konzentrisch von einer Entgasungsnut umgeben, welche einen größeren Strömungsquerschnitt aufweist als der Freischliff und welche zur Sammlung des ausströmenden Gases dient. Das aus dem Freischliff in die umlaufende Entgasungsnut austretende Gas wird in der Nut zu in radialer Richtung verlaufenden Kanälen geführt, welche die Nut mit der äußeren Mantelfläche der Buchse verbinden.

In einer weiteren Ausführungsform weist der Grundkörper des Übergabeelements mehr als zwei Teile auf, die im wesentlichen hohlzylindrisch sind und die jeweils mindestens eine Grundfläche aufweisen, wobei die Grundflächen zweier Teile zumindest abschnittsweise aneinanderstoßen, wobei jeweils eines der aneinanderstoßenden Teile ein Oberteil und das ändere ein Unterteil im Sinne dieser Erfindung bildet. Auf diese Weise können wie zuvor beschrieben in den Stoß- bzw. Trennbereichen zwischen den Teilen in mehr als einer Ebene Entgasungskanäle für das Übergabeelement bereitgestellt werden.
Die vorliegende Aufgabe wird außerdem durch ein Heißkanalsystem mit einer Angußbuchse mit den zuvor beschriebenen Merkmalen sowie durch eine Spritzgießmaschine mit einer Maschinendüse mit den zuvor beschriebenen Merkmalen gelöst.

Weitere Merkmale, Vorteile und Anwendungsmöglichkeiten der vorliegenden Erfindung ergeben sich aus den beigefügten Figuren sowie der dazugehörigen Beschreibung.
- Figur 1: zeigt eine Angußdüse eines Heißkanalsystems aus dem Stand der Technik.
- Figur 2: zeigt eine Schnittansicht einer erfindungsgemäßen Ausführungsform einer Angußdüse.
- Figur 3: zeigt eine Draufsicht auf die Grundfläche bzw. Trennfläche zum Unterteil des Angußbuchsenoberteils aus Figur 2.
- Figur 4: zeigt eine isometrische Explosionsdarstellung des Grundkörpers der Angußbuchse aus Figuren 2 und 3.
- Figur 5: zeigt eine Draufsicht auf die Grundfläche bzw. Trennfläche zum Unterteil eines Angußbuchsenoberteils einer alternativen Ausführungsform.
- Figur 6: zeigt eine weitere Ausführungsform der erfindungsgemäßen Angußbuchse.
- Figur 7: zeigt eine vergrößerte Ansicht der Angußbuchse aus Figur 6.
- Figur 8: zeigt eine Draufsicht auf die Grundfläche bzw. Trennfläche zum Unterteil des Angußbuchsenoberteils aus Figuren 6 und 7.
- Figur 9: zeigt schematisch den Aufbau einer erfindungsgemäßen Maschinendüse.

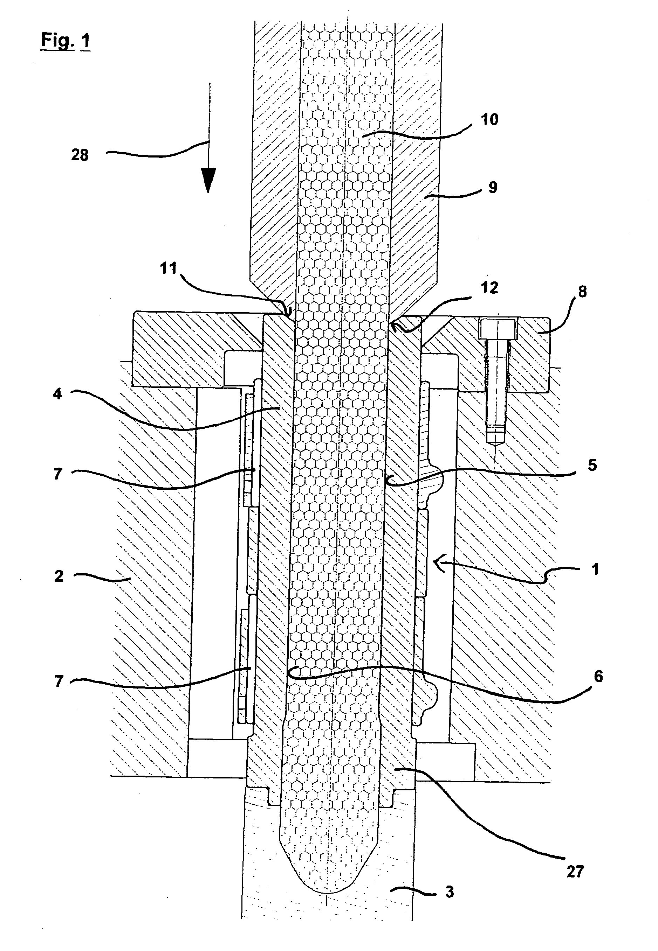

In Figur 1 ist eine Angußbuchse 1 für ein Heißkanalsystem aus dem Stand der Technik dargestellt. Dabei ist die Angußbuchse 1 in die Deckplatte 2 des Heißkanalsystems eingelassen und mündet in den Heißkanalblock 3. Die Angußbuchse 1 weist einen Grundkörper 4 auf, welcher eine im wesentlichen eine hohlzylindrische Form, mit einer äußeren Mantelfläche 5 und einer inneren Mantelfläche 6, aufweist. Dabei ist der hohlzylindrische Grundkörper 4 der Angußbuchse 1 von Heizungselementen 7 ringförmig umgeben, so daß das fließfähige plastifizierte Kunststoffmaterial im Grundkörper 4 der Angußbuchse 1 nicht erkaltet.

Der Grundkörper 4 der Angußbuchse 1 wird an ihrem kanalseitigen Ende mit Hilfe eines Flansches 27 mit dem Heißkanalverteiler verschraubt, während das maschinenseitige Ende des Grundkörpers 4 mit Hilfe eines Zentrierrings 8, der mit der Heißkanaldeckplatte 2 verschraubt ist, zentrisch in einer entsprechenden Ausnehmung der Heißkanaldeckplatte gehalten wird.

In Figur 1 ist neben der Angußbuchse 1 ein weiteres Übergabeelement, nämlich die Spitze einer Maschinendüse 9 dargestellt. Die Maschinendüse 9 und der Grundkörper 4 der Angußbuchse 1 des Heißkanalsystems stoßen derart aneinander, daß ein Strom eines plastifizierten Kunststoffmaterials 10 ohne Verlust von der Maschinendüse 9 in den Grundkörper 4 der Angußbuchse 1 übertreten kann. Zu diesem Zweck weist der Grundkörper 4 der Angußbuchse 1 an seinem oberen, maschinenseitigen Ende eine konzentrische Dichtfläche 11 auf. Dabei ist die Dichtfläche 11 gekrümmt. Die Maschinendüse 9 weist ebenfalls an ihrer vorderen Spitze eine konzentrische Dichtfläche mit einer Krümmung auf. Dabei ist die Krümmung der Dichtfläche 12 der Maschinendüse 9 größer als die Krümmung der Dichtfläche 11 des Grundkörpers 4 der Angußbuchse 1. Daher kommt es, wenn die beiden Übergabeelemente 4, 9 miteinander in Eingriff treten, zur Ausbildung einer linienförmigen Dichtung mit hoher Dichtwirkung zwischen Abschnitten der Dichtflächen 11, 12.

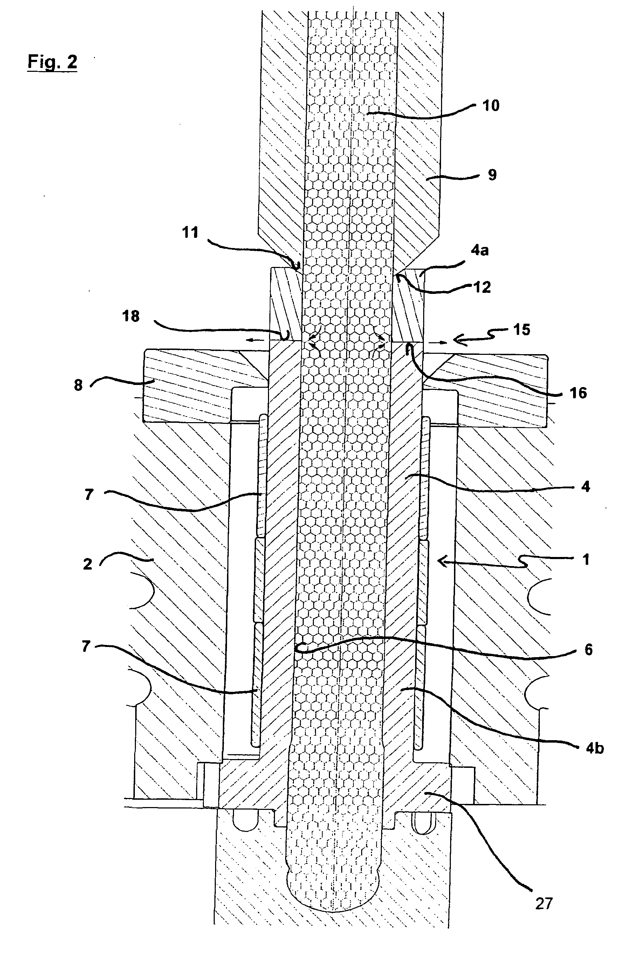

In den nachfolgenden Figuren 2 bis 4, welche eine bevorzugte Ausführungsform der vorliegenden Erfindung darstellen, sind die mit der Angußbuchse 1 bzw. Maschinendüse 9 aus Figur 1 identischen Elemente mit gleichen Bezugszeichen markiert.

Bei der in Figur 2 dargestellten erfindungsgemäßen Angußbuchse 1 ist der Grundkörper 4 aus einem Oberteil 4a und einem Unterteil 4b aufgebaut. Dabei wird im Stoßbereich 15 zwischen dem Oberteil 4a und dem Unterteil 4b des Grundkörpers 4 ein Kanal zur Entgasung des von der inneren Mantelfläche 6 des Grundkörpers 4 gebildeten Durchflußlumens bereitgestellt. Dieser Kanal im Stoßbereich 15 ist dabei so ausgestaltet, daß seine Spaltbreite den Durchtritt von Gas bzw. Staub erlaubt, während das plastifizierte Kunststoffmaterial 10 den Grundkörper 4 der Angußbuchse 1 nicht verlassen kann.

In Figur 2 ist deutlich zu erkennen, daß der Stoßbereich 15 zwischen dem Oberteil 4a und dem Unterteil 4b des Grundkörpers 4 oberhalb des Zentrierrings 8 im Grundkörper 4 der Angußbuchse 1 angeordnet ist. Dabei ist der Stoßbereich 15 gegenüber dem Zentrierring 8 in Richtung auf die Maschinendüse 9 hin verschoben. Auf diese Weise wird vermieden, daß sich der durch den Durchlaßkanal austretende Staub in Außenbereichen der Angußbuchse niederschlägt, in denen er die Funktion der Angußbuchse beeinträchtigt.

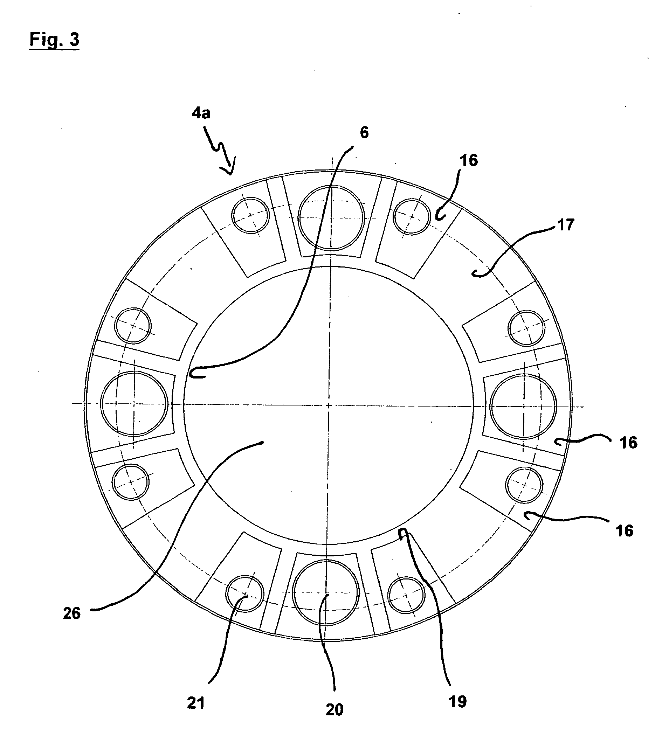

Figur 3 zeigt eine Ansicht von unten auf die Grundfläche 16 des Oberteils 4a des Grundkörpers 4 der Angußbuchse 1. Die Grundfläche 16 des Oberteils 4a weist einen Freischliff 17 auf, der gegenüber den mit der Grundfläche 18 des Unterteils 4b in Eingriff tretenden Flächen 16 einen Höhenunterschied von 0,03 mm aufweist. Werden Oberteil 4a und Unterteil 4b des Grundkörpers 4 miteinander verschraubt, so entsteht durch den Freischliff 17 ein System von Kanälen, welches ein Entgasen von Staub aus dem Durchflußlumen 26 des Grundkörpers 4 ermöglicht.

In der dargestellten Ausführungsform weist der Freischliff 17 einen ringförmigen Bereich 19 auf, welcher unmittelbar an die innere Mantelfläche 6 des Grundkörpers anschließt, so daß das Gas in allen Richtungen aus dem Durchflußlumen 26 entweichen kann.

In der Ansicht auf die Grundfläche des Oberteils 4a in Figur 3 sind auch Stirnbohrungen 20, 21 zu erkennen. Dabei dienen die Bohrungen 20 mit großem Durchmesser zur Aufnahme von Zentrierstiften 22, während die Bohrungen 21 mit kleinerem Durchmesser zum Durchführen von Befestigungsschrauben 23 vorgesehen sind.

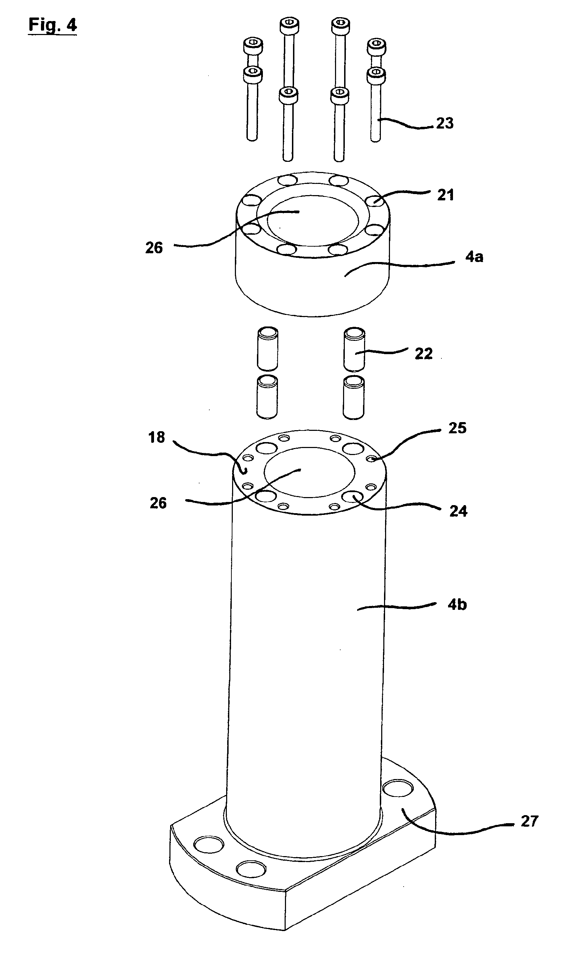

Die Verschraubung und Zentrierung des Oberteils 4a und des Unterteils 4b des Grundkörpers 4 ist deutlich in der isometrischen Ansicht aus Figur 4 zu erkennen. Während Zentrierstifte 22 in Zentrierbohrungen 24 im Unterteil 4b und Zentrierbohrungen 20 im Oberteil 4a aufgenommen werden, greifen die Befestigungsschrauben 23 durch die Bohrungen 21 im Oberteil 4a hindurch und werden in den Gewindebohrungen 25 des Unterteils 4b verschraubt. Durch die Verschraubungen sowie durch die hohe Anpreßkraft 28 mit welcher die Maschinendüse 9 gegen die Angußbuchse 1 gedrückt wird, werden die gegenüber dem Freischliff 17 vorspringenden Teile 16 der Grundfläche des Oberteils 4a kraftschlüssig gegen die Grundfläche 18 des Unterteils 4b gepreßt, so daß lediglich die durch den Freischliff 17 bereitgestellten Kanäle eine Entgasung des Durchflußlumens 18 ermöglichen.

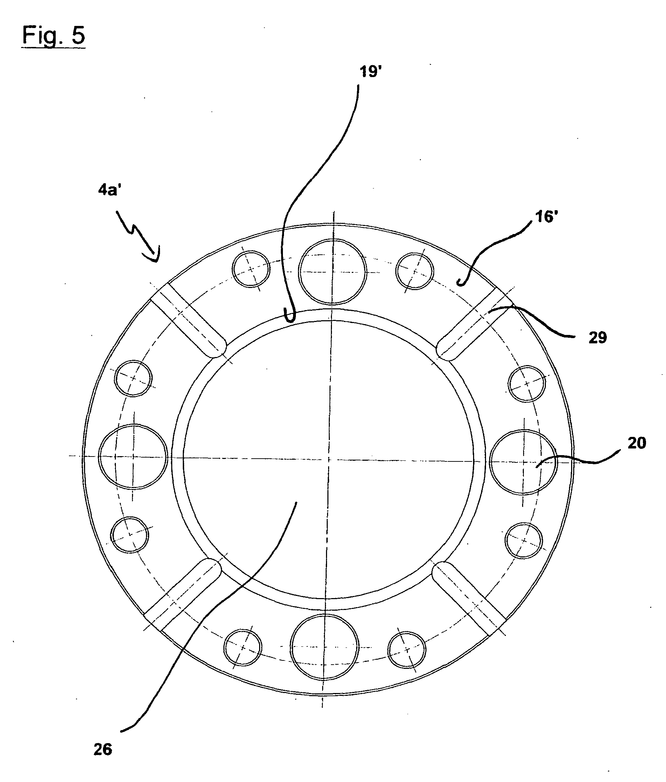

Figur 5 zeigt eine Draufsicht auf die Grundfläche eines Oberteils 4a' einer alternativen Ausführungsform der erfindungsgemäßen Angußbuchse 1. Wie die zuvor beschriebene Ausführungsform weist die Grundfläche 16' des Oberteils 4a' einen kreisförmigen Freischliff 19' auf, welcher unmittelbar an das Durchflußlumen 26 des Oberteils 4a' angrenzt. Die Entgasung des Freischliffs erfolgt über vier Entgasungsnuten 29, welche sternförmig um das Durchflußlumen 26 angeordnet sind. Dabei weisen die Entgasungsnuten einen Durchmesser auf, welcher größer ist als die Tiefe des Freischliffs 19'. Vorteilhaft erweist sich bei dieser Variante, daß eine größere Auflagefläche zwischen dem Ober- (4a') und dem Unterteil der Angußbuchse bereitgestellt wird.

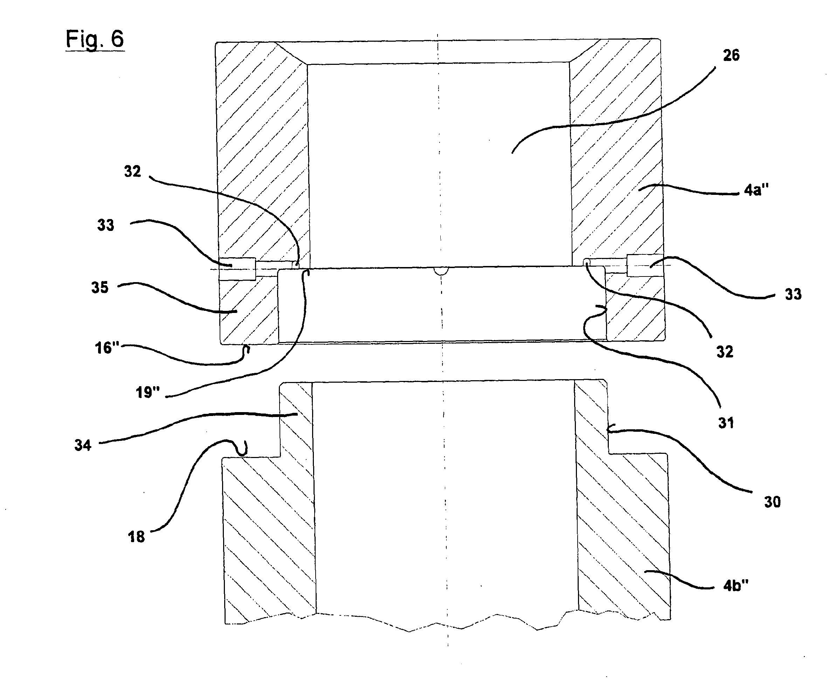

In den Figuren 6 bis 8 ist eine besonders bevorzugte Ausführungsform der Erfindung dargestellt, bei welcher das Oberteil 4a" und das Unterteil 4b" des Grundkörpers der Angußbuchse einen Paßdurchmesser zur Zentrierung des Ober- 4a" und des Unterteils 4b" aufweisen. Mit Hilfe eines solchen Paßdurchmessers können hohe Seitenkräfte abgefangen werden, die beispielsweise durch einen seitlichen Versatz zwischen der Angußbuchse und der Maschinendüse auftreten können. Zu diesem Zweck weist das Unterteil 4b" einen in axialer Richtung vorspringenden Abschnitt 34 auf, dessen Außenfläche 30 den gleichen bzw. einen geringfügig kleineren Durchmesser aufweist als die Innenfläche 31 des heißkanalseitigen Endes 35 des Oberteils 4a". Nach dem Zusammenbau von Oberteil 4a" und Unterteil 4b" greift der axial vorspringende Abschnitt 34 des Unterteils 4b" in das heißkanalseitige Ende des Oberteils 4a" ein.

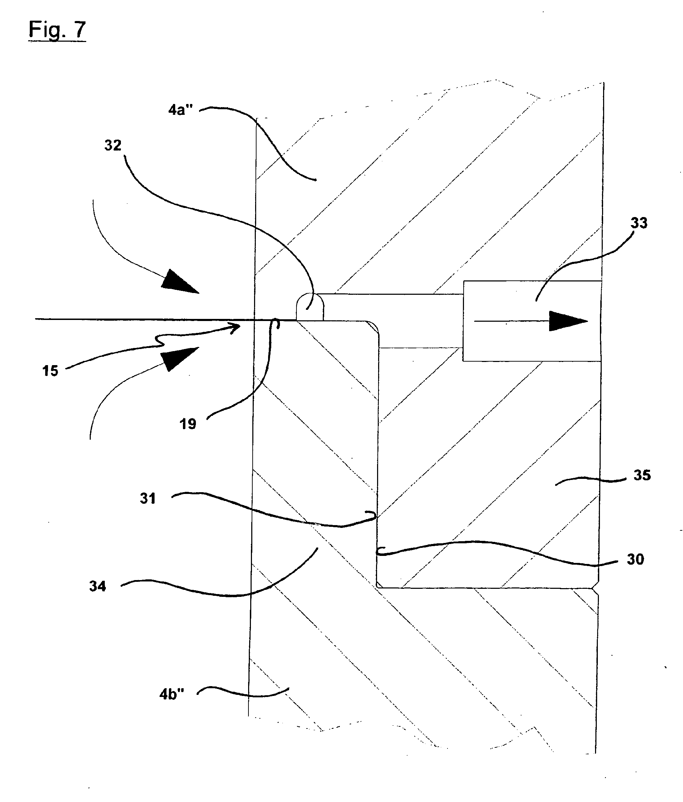

Die Ausgestaltung der Entgasungseinrichtung ist detailliert in Figur 7 gezeigt, welche eine Ausschnittsvergrößerung der zusammengefügten Elemente aus Figur 6 darstellt. Deutlich ist ein kreisförmiger Freischliff 19" in der Grundfläche des Oberteils 4a" zu erkennen, durch welchen nach dem Zusammenfügen des Ober- 4a" und des Unterteils 4b" ein Entgasungsspalt in der Stoß- bzw. Trennebene 15" zwischen Ober- und Unterteil bereitgestellt wird. Der Freischliff 19" mündet in radialer Richtung in eine umlaufende, ringförmige Entgasungsnut 32, welche den Freischliff 19" konzentrisch umgibt. Dort sammelt sich das aus dem Durchflußlumen der Angußbuchse entweichende Gas und wird von dort über in radialer Richtung verlaufende Entgasungsbohrungen 33, welche sternförmig über den Umfang der Buchse verteilt sind, nach außen abgeführt.

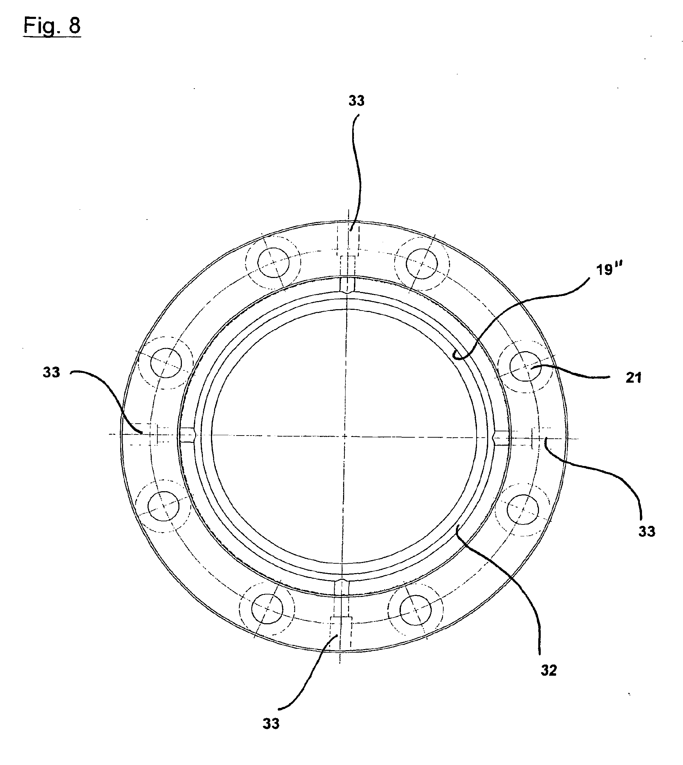

Figur 8 zeigt erläuternd eine Ansicht von unten auf die Grundfläche des Oberteils 4a". Deutlich sind die konzentrische Anordnung des Freischliffs 19" und der umlaufenden Entgasungsnut 32 zu erkennen. Auch die Anordnung der vier radialen, unter 90° zueinander angeordneten Entgasungsbohrungen, die in die umlaufende Entgasungsnut münden, geht aus dieser Figur deutlich hervor.

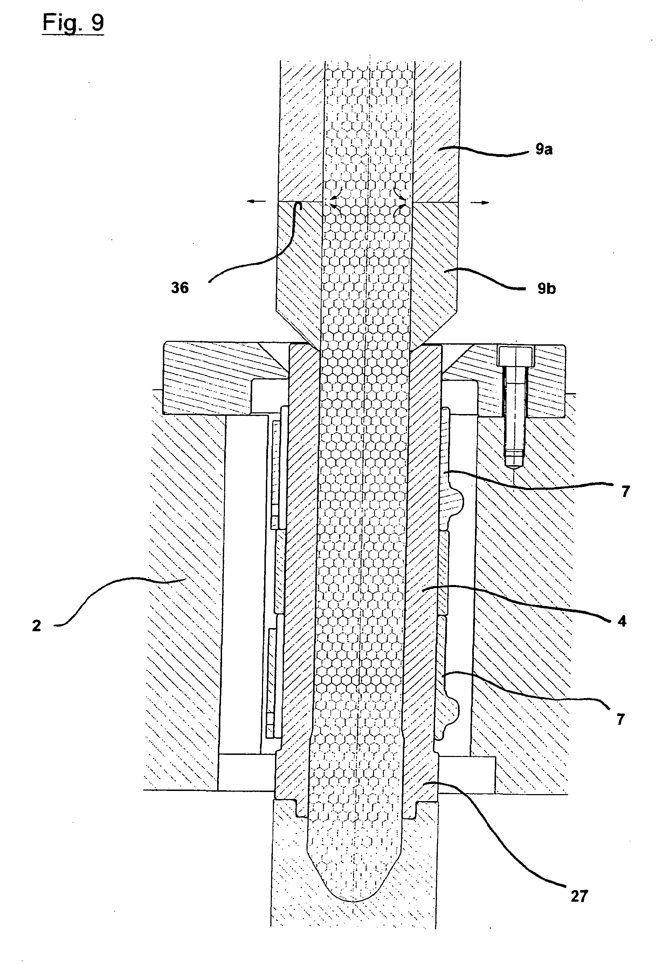

Figur 9 zeigt entsprechend Figur 2 schematisch die Anordnung und das Zusammenwirken von Maschinendüse und Angußbuchse. Dabei ist entgegen Figur 2 nicht die Angußbuchse, sondern die Maschinendüse zweiteilig ausgestaltet, so daß die Entgasungseinrichtung in der Maschinendüse bereitgestellt wird. Der Grundkörper 9 der Maschinendüse besteht aus einem Oberteil 9a und einem Unterteil 9b, wobei in der dargestellten Ausführungsform das Düsenoberteil in seiner Grundfläche 36 einen Freischliff aufweist. Eine Draufsicht auf die Grundfläche des Maschinendüsenoberteils 9a zeigt, abgesehen von entsprechend angepaßten Radien, den gleichen Aufbau wie die Grundfläche des Angußbuchsenoberteils aus Figur 3, mit der gleichen Funktionalität wie zuvor für die Angußbuchse beschrieben. Auch lassen sich alle anderen Ausführungsformen der Entgasungseinrichtung für die Angußbuchse auf die Maschinendüse übertragen.

### Bezugszeichenliste

- 1: Angußbuchse
- 2: Deckplatte
- 3: Heißkanalblock
- 4: hohlzylindrischer Grundkörper
- 4a, 4a', 4a": Oberteil des Grundkörpers der Angußbuchse
- 4b, 4b', 4b": Unterteil des Grundkörpers der Angußbuchse
- 5: äußere Mantelfläche
- 6: innere Mantelfläche
- 7: Heizungselement
- 8: Zentrierring
- 9: Maschinendüse
- 9a: Oberteil der Maschinendüse
- 9b: Unterteil der Maschinendüse
- 10: Kunststoffmaterial
- 11: Dichtfläche der Angußbuchse
- 12: Dichtfläche der Maschinendüse
- 15, 15": Stoßebene
- 16, 16": Grundfläche des Oberteils
- 17: Freischliff
- 18: Grundfläche des Unterteils
- 19, 19', 19": kreisförmiger Bereich des Freischliffs
- 20: Bohrungen im Oberteil
- 21: Bohrungen im Oberteil
- 22: Paßstifte
- 23: Befestigungsschrauben
- 24: Bohrungen im Unterteil
- 25: Gewindebohrungen
- 26: Durchflußlumen
- 27: Flansch
- 28: Maschinendüsenanpreßkraft
- 29: Entgasungsnut
- 30: Außenfläche mit Paßdurchmesser
- 31: Innenfläche mit Paßdurchmesser
- 32: umlaufende Entgasungsnut
- 33: radiale Entgasungsbohrung
- 34: vorspringender Abschnitt
- 35: heißkanalseitiges Ende des Oberteils 4a"
- 36: Grundfläche des Oberteils 9a der Maschinendüse

## Patentansprüche

1. Übergabeelement (1, 9) für ein Spritzgießsystem mit einem Durchflußlumen (26) für ein plastifiziertes Kunststoffmaterial, das eine Einrichtung zur Entgasung des Durchflußlumens (26) aufweist, und das
einen im wesentlichen hohlzylindrischen Grundkörper (4, 9) mit einer inneren (6) und einer äuβeren (5) Mantelfläche aufweist, wobei die Einrichtung zur Entgasung mindestens einen gasdurchlässigen Kanal aufweist, welcher die innere (6) und die äußere (5) Mantelfläche verbindet, wobei der Grundkörper (4, 9) zumindest zweiteilig aufgebaut ist, mit einem Oberteil (4a, 4a', 4a", 9a) und einem Unterteil (4b, 4b', 4b", 9b), die im wesentlichen hohlzylindrisch sind und jeweils mindestens eine Grundfläche (16, 18) aufweisen, wobei das Oberteil (4a) und das Unterteil (4b) so angeordnet sind, daß Ihre Grundflächen (16, 18) zumindest abschnittsweise aneinanderstoßen, **dadurch gekennzeichnet, daß** die Grundfläche (16) des Oberteils (4a, 4a', 4a", 9a) und/oder des Unterteils (4b, 4b', 4b", 9b) einen Freischliff (17, 19, 19', 19") aufweist, so daß mindestens ein Spalt zwischen den Grundflächen (16, 18) gebildet wird, welcher zumindest als Abschnitt eines gasdurchlässigen Kanals die innere (6) und die äußere (5) Mantelfläche des Grundkörpers (4, 9) verbindet.

2. Übergabeelement (1, 9) nach Anspruch 1, **dadurch gekennzeichnet, daß** der Spalt eine Dicke von weniger als 0,04 mm und besonders bevorzugt eine Dicke von etwa 0,03 mm aufweist.

3. Übergabeelement (1, 9) nach Anspruch 1 oder 2, **dadurch gekennzeichnet, daß** der Freischliff (17, 19, 19', 19") über den Umfang des Übergabeelements verteilt Spalte zwischen den Grundflächen (16, 18) des Oberteils (4a) und des Unterteils (4b) bildet, welche zumindest als Abschnitte gasdurchlässiger, vorzugsweise sternförmig angeordneter Kanäle die innere (6) und die äußere (5) Mantelfläche des Übergabeelements verbinden.

4. Übergabeelement (1, 9) nach einem der Ansprüche 1 bis 3, **dadurch gekennzeichnet, daß** der Freischliff (17, 19, 19', 19") an die innere Mantelfläche (6) angrenzend einen in Umfangsrichtung zusammenhängenden, im wesentlichen kreisförmigen Bereich (19) aufweist.

5. Übergabeelement (1, 9) nach Anspruch 4, **dadurch gekennzeichnet, daß** der zusammenhängende Bereich (19) des Freischliffs (17, 19, 19', 19") an seiner der inneren Mantelfläche (6) abgewandten Seite in eine Entlüftungsbohrung oder eine Nut (29) mündet, welche den Freischliff (17) mit der äußeren Mantelfläche (5) verbindet.

6. Übergabeelement (1,9) nach einem der Ansprüche 1 bis5, **dadurch gekennzeichnet, daß** es eine umlaufende Entgasungsnut (32) aufweist, in welche der Freischliff mündet.

7. Übergabeelement (1,9) nach einem der Ansprüche 1 bis 6, **dadurch gekennzeichnet, daß** der Grundkörper des Übergabeelements mehr als zwei Teile aufweist, die im wesentlichen hohlzylindrisch sind und die jeweils mindestens eine Grundfläche aufweisen, wobei die Grundflächen zweier Teile zumindest abschnittsweise aneinanderstoßen, wobei jeweils eines der aneinanderstoßenden Teile ein Oberteil (4a, 4a', 4a", 9a) und das andere ein Unterteil (4b, 4b', 4b", 9b) bildet.

8. Übergabeelement (1, 9) nach einem der Ansprüche 1 bis 7, **dadurch gekennzeichnet, daß** es eine Angußbuchse (1) für ein Heißkanalsystem ist.

9. Übergabeelement (1, 9) nach einem der Ansprüche 1 bis 8, **dadurch gekennzeichnet, daß** das Übergabeelement eine Maschinendüse (9) für eine Spritzgießmaschine ist.

10. Heißkanalsystem mit einer Angußbuchse (1) nach Anspruch 8.

11. Heißkanalsystem nach Anspruch 10, **dadurch gekennzeichnet, daß** das Heißkanalsystem einen Zentrierring (8) zur Halterung des Grundkörpers (4b) der Angußbuchse (1) aufweist und der Bereich (15), in welchem das Oberteil und das Unterteil der Angußbuchse (1) aneinanderstoßen, außerhalb des Zentrierrings (8) in Richtung auf die Maschinendüse (9) hin verschoben angeordnet ist.

12. Spritzgießmaschine mit einer Maschinendüse (9) nach Anspruch 9.

## Claims

1. A transfer element (1, 9) for an injection moulding system comprising a flow lumen (26) for a plasticised plastic material, which has a device for degassing of the flow lumen (18) and which has a substantially hollow-cylindrical main body (4, 9) having an inner peripheral surface (6) and an outer peripheral surface (5), wherein the degassing device has at least one gas-permeable passage connecting the inner peripheral surface (6) and the outer peripheral surface (5), wherein the main body (4, 9) is at least of a two-part structure comprising an upper part (4a, 4a', 4a", 9a) and a lower part (4b, 4b', 4b", 9b) which are substantially hollow-cylindrical and each have at least one main face (16, 18), wherein the upper part (4a) and the lower part (4b) are so arranged that their main faces (16, 18) butt at least portion-wise against each other, **characterised in that** the main face (16) of the upper part (4a, 4a', 4a", 9a) and/or the lower part (4b, 4b', 4b", 9b) has a free-ground clearance (17, 19, 19', 19") so that at least one gap is formed between the main faces (16, 18), which at least as a portion of a gas-permeable passage connects the inner peripheral surface (6) and the outer peripheral surface (5) of the main body (4, 9).

2. A transfer element (1, 9) according to claim 1 **characterised in that** the gap is of a thickness of less than 0.04 mm and particularly preferably a thickness of about 0.03 mm.

3. A transfer element (1, 9) according to claim 1 or claim 2 **characterised in that** the free-ground clearance (17, 19, 19', 19") forms distributed over the periphery of the transfer element gaps between the main faces (16, 18) of the upper part (4a) and the lower part (4b), which at least as portions of gas-permeable passages preferably arranged in a star form connect the inner peripheral surface (6) and the outer peripheral surface (5) of the transfer element.

4. A transfer element (1, 9) according to one of claims 1 to 3 **characterised in that** the free-ground clearance (17, 19, 19', 19") has adjoining the inner peripheral surface (6) a substantially circular region (19) which is continuous in the peripheral direction.

5. A transfer element (1, 9) according to claim 4 **characterised in that** the continuous region (19) of the free-ground clearance (17, 19, 19', 19") at its side remote from the inner peripheral surface (6) opens into a vent bore or a groove (29) which connects the free-ground clearance (17) to the outer peripheral surface (5).

6. A transfer element (1, 9) according to one of claims 1 to 5 **characterised in that** it has a peripherally extending degassing groove (32) into which the free-ground clearance opens.

7. A transfer element (1, 9) according to one of claims 1 to 6 **characterised in that** the main body of the transfer element has more than two parts which are substantially hollow-cylindrical and which each have at least one respective main face, wherein the main faces of two parts at least portion-wise butt against each other, wherein a respective one of the mutually butting parts forms an upper part (4a, 4a', 4a", 9a) and the other forms a lower part (4b, 4b', 4b", 9b).

8. A transfer element (1, 9) according to one of claims 1 to 7 **characterised in that** it is a sprue bush (1) for a hot runner system.

9. A transfer element (1, 9) according to one of claims 1 to 8 **characterised in that** the transfer element is a machine nozzle (9) for an injection moulding machine.

10. A hot runner system having a sprue bush (1) according to claim 8.

11. A hot runner system according to claim 10 **characterised in that** the hot runner system has a centring ring (8) for holding the main body (4b) of the sprue bush (1) and the region (15) in which the upper part and the lower part of the sprue bush (1) butt against each other is arranged outside the centring ring (8) displaced in a direction towards the machine nozzle (9).

12. An injection moulding machine having a machine nozzle (9) according to claim 9.

## Revendications

1. Élément de transfert (1, 9) pour un système de moulage par injection avec une lumière (26) de débit pour une matière plastique plastifiée qui présente un dispositif pour le dégazage de la lumière (26) de débit, et qui présente un corps (4, 9) de base sensiblement cylindrique creux avec une surface d'enveloppe intérieure (6) et extérieure (5), le dispositif de dégazage présentant au moins un canal perméable aux gaz, qui relie la surface d'enveloppe intérieure (6) et la surface d'enveloppe extérieure (5), le corps (4, 9) de base étant constitué au moins de deux parties, avec une partie supérieure (4a, 4a', 4a", 9a) et une partie inférieure (4b, 4b', 4b", 9b) sensiblement cylindriques creuses et qui présentent respectivement au moins une surface (16, 18) de base, la partie supérieure (4a) et la partie inférieure (4b) étant disposées de telle sorte que leurs surfaces (16, 18) de base sont au moins en partie en aboutement,
**caractérisé en ce que** la surface (16) de base de la partie supérieure (4a, 4a', 4a", 9a) et/ou de la partie inférieure (4b, 4b', 4b", 9b) présente(nt) un dégagement (17, 19, 19', 19"), de sorte à former au moins une fente entre les surfaces (16, 18) de base, laquelle relie la surface d'enveloppe intérieure (6) et extérieure (5) du corps de base (4, 9) au moins en tant que section d'un canal perméable aux gaz.

2. Élément de transfert (1, 9) selon la revendication 1, **caractérisé en ce que** la fente possède une largeur inférieure à 0,04 mm et notamment, de préférence, une largeur d'environ 0,03 mm.

3. Élément de transfert (1, 9) selon les revendications 1 ou 2, **caractérisé en ce que** le dégagement (17, 19, 19', 19") forme des fentes entre les surfaces de base (16, 18) de la partie supérieure (4a) et de la partie inférieure (4b) réparties sur le pourtour de l'élément de transfert, lesquelles relient la surface d'enveloppe intérieure (6) et la surface d'enveloppe extérieure (5) du corps de base de l'élément de transfert au moins en tant que sections de canaux perméables aux gaz, disposés de préférence en étoile.

4. Élément de transfert (1, 9) selon l'une des revendications 1 à 3, **caractérisé en ce que** le dégagement (17, 19, 19', 19") présente une zone (19) sensiblement circulaire d'un seul tenant dans le sens périphérique, adjacente à la surface d'enveloppe intérieure (6).

5. Élément de transfert (1, 9) selon la revendication 4, **caractérisé en ce que** la zone (19) d'un seul tenant du dégagement (17, 19, 19', 19") débouche dans un alésage de ventilation ou une rainure (29) sur le côté opposé à la surface d'enveloppe intérieure (6).

6. Élément de transfert (1, 9) selon l'une des revendications 1 à 5, **caractérisé en ce qu'**il présente une rainure (32) de dégazage périphérique dans laquelle débouche le dégagement.

7. Élément de transfert (1, 9) selon l'une des revendications 1 à 6, **caractérisé en ce que** le corps de base de l'élément de transfert présente plus de deux parties, qui sont sensiblement cylindriques creuses et qui présentent respectivement au moins une surface de base, les surfaces de base de deux parties étant au moins en partie en aboutement, l'une des parties en aboutement formant respectivement une partie supérieure (4a, 4a', 4a", 9a) et l'autre, une partie inférieure (4b, 4b', 4b", 9b).

8. Élément de transfert (1, 9) selon l'une des revendications 1 à 7, **caractérisé en ce qu'**il s'agit d'une buse (1) d'alimentation d'un système de canal chauffant.

9. Élément de transfert (1, 9) selon l'une des revendications 1 à 8, **caractérisé en ce que** l'élément de transfert est une buse (9) de machine de moulage par injection.

10. Système de canal chauffant comportant une buse (1) d'alimentation selon la revendication 8.

11. Système de canal chauffant selon la revendication 10, **caractérisé en ce que** le système de canal chauffant présente une bague (8) de centrage pour la fixation du corps (4b) de base de la buse (1) d'alimentation et **en ce que** la zone (15), dans laquelle la partie supérieure et la partie inférieure de la buse (1) d'alimentation sont en aboutement, est disposée en dehors de la bague (8) de centrage, décalée en direction de la buse (9) de machine.

12. Machine de moulage par injection comportant une buse (9) de machine selon la revendication 9.
